## Europäisches Patentamt

## European Patent Office

## Office européen des brevets

(11) Veröffentlichungsnummer : **0 162 085**
**B1**

(12) **EUROPÄISCHE PATENTSCHRIFT**

(45) Veröffentlichungstag der Patentschrift :
27.07.88

(51) Int. Cl.⁴ : **F 23 J 7/00, B 01 D 53/34**

(21) Anmeldenummer : 85900002.8

(22) Anmeldetag : 23.11.84

(86) Internationale Anmeldenummer :
PCT/AT 84/00042

(87) Internationale Veröffentlichungsnummer :
WO/8502453 (06.06.85 Gazette 85/13)

(54) VERFAHREN ZUR ABSCHEIDUNG VON SAUREN SCHADGASEN UND VERBRENNUNGSANLAGE.

(30) Priorität : 25.11.83 AT 4136/83

(43) Veröffentlichungstag der Anmeldung :
27.11.85 Patentblatt 85/48

(45) Bekanntmachung des Hinweises auf die Patenterteilung : 27.07.88 Patentblatt 88/30

(84) Benannte Vertragsstaaten :
BE CH DE FR GB LI LU NL SE

(56) Entgegenhaltungen :
DE-A- 3 308 927
FR-A- 1 424 831
FR-A- 2 285 169
FR-A- 2 500 322
Die Akte enthält technische Angaben, die nach dem Eingang der Anmeldung eingereicht wurden und die nicht in dieser Patentschrift enthalten sind.

(73) Patentinhaber : WAAGNER-BIRO AKTIENGESELLS-CHAFT
Stadlauer-Strasse 54 Postfach 11
A-1221 Wien (AT)

(72) Erfinder : LINDBAUER, Ralf
Statteggerstrasse 81e
A-8045 Graz (AT)
Erfinder : GLASNER, Alfred
Alte Poststrasse 55/I
A-8020 Graz (AT)

(74) Vertreter : Wallner, Gerhard, Dipl.-Ing.
c/o Waagner-Biro Aktiengesellschaft Patentabteilung
Stadlauer-Strasse 54 Postfach 11
A-1221 Wien (AT)

**Beschreibung**

### Anwendungsgebiet der Erfindung

Im allgemeinen bezieht sich die Erfindung auf die trockene Entfernung der Schadgase und Schwermetalle aus Rauchgasen und im besonderen auf ein Verfahren zur zweistufigen Abscheidung von sauren Schadgasen und Schwermetallen sowie deren Verbindungen aus Rauchgasen nach Verbrennungsanlagen, wie z. B. Müllverbrennungsanlagen, bei welchem mit dem Brennstoff bzw. in den heißen von der Verbrennungsstelle abziehenden Rauchgasstrom mit der benötigten Verbrennungsluft im Bereich der Brennkammer im Temperaturbereich von höher als 700 °C staubförmiges $CaCO_3$ und/oder $MgCO_3$ eingebracht und ein Teil des Schadgases vom staubförmigen Zerfallprodukt gebunden wird sowie das beladene Zerfallprodukt vom Rauchgasstrom abgetrennt wird, und eine Verbrennungsanlage zur Durchführung des Verfahrens.

Die Verbrennung von Müll ist eine der saubersten Müllbeseitigungsarten, weist aber den Nachteil auf, daß durch den Kamin eine Reihe von freigesetzten Schadstoffen wie z. B. HCl, $SO_2$, HF sowie Schwermetalle und Verbindungen der Schadstoffe untereinander entweichen. So wurden neben mittleren HCl-Gehalten von ca. 1 000 mg $HCl/Nm^3$ schon mehr als 1 500 mg $HCl/Nm^3$ in den Abgasen gemessen. Laut TA Luft liegt die Toleranzgrenze für Neuanlagen bei 100 bzw. bei Altanlagen bei 200 mg $HCl/Nm^3$.

### Charakteristik der bekannten Lösungen

Es ist aus der DE-A-29 32 676 bekannt, basische Sorbentien zur Einbindung von sauren Schadstoffen in trockenen Verfahren zu verwenden. Als Sorbens wird hierbei $CaCO_3$, $MgCO_3$, $Na_2CO_3$, $NaHCO_3$, $Ca(OH)_2$, CaO und MgO und ähnliches allein bzw. in Verbindung oder in Mischung verwendet. Bei der Verwendung von Karbonaten und Hydroxiden werden dieselben durch Temperatureinwirkung in der Brennkammer in reaktives Sorbens wie z. B. CaO und MgO zerlegt, durch deren Verwendung das Verfahren verbilligt wird. Aus thermodynamischen Gründen ist die Einbindung von HCl oder $SO_2$ an jedes der genannten Sorbentien begrenzt, so daß bei Müllverbrennungsanlagen in der Brennkammer nur maximal 75 % des HCl bzw. 65 % des $SO_2$ unter Unterdrückung der Gefahr der Verschlackung der nachgeschalteten Heizflächen des Dampferzeugers direkt beseitigt werden können. Dadurch ist bei diesem Verfahren die Erreichung der in der TA Luft genannten Toleranzgrenze im allgemeinen nicht möglich.

Um der Verschlackung im Kessel entgegen zu wirken, ist eine Anzahl von Verfahren bekannt geworden, bei welchen vor dem Eintritt in die Rauchgasendreinigungsstufe Sorbentien wie z. B. CaOH bzw. CaO in einem eigenen Reaktor bzw. einer speziellen Kontaktstrecke eingebracht werden. Bei derartigen Anlagen ist ein hoher stöchiometrischer Aufwand erforderlich, damit eine ausreichende Abscheidung erreicht werden kann. Kennzeichen für alle einstufigen Trockenverfahren der ersten oder der zweiten Art ist ein hoher Chemikalienaufwand, eine geringe Pufferwirkung, das bedeutet, daß bei einem Ausfall des Systems die volle Schadgasemission auftritt, so daß damit eine mangelhafte Betriebssicherheit erreicht wird. Der über-stöchiometrische Chemikalienaufwand spiegelt sich auch in hohen Deponiekosten wider, wobei die Emission der Luft zum Teil in eine Verschmutzung des Bodens umgewandelt wurde. Zur Verbesserung der trockenen Verfahren ist es ferner bekannt (FR-A-2 500 322 bzw. DE-A-31 06 526 und DE-A-31 06 580), zumindest einen Teilstrom des abströmenden gereinigten Abgases naß zu reinigen und diesen mit dem trocken gebliebenen Teilstrom wieder zu vereinen. Die FR-A-1 424 831 offenbart die Möglichkeiten, ein trockenes Absorbens entweder in die Brennkammer oder nach der Brennkammer in den Rauchgasstrom einzublasen und durch Zyklone abzuscheiden, wobei der abgeschiedene trockene Staub zur besseren Ausnützung des Absorbens wieder in den Rauchgasstrom, zumindest teilweise, eingebunden werden kann.

### Ziel der Erfindung

Die Erfindung hat es sich zur Aufgabe gestellt, den Chemikalienaufwand bei trockener Abscheidung von Schadgasen zu reduzieren, die Sorptionsmittelkosten und auch die Deponiekosten bzw. Beanspruchung der Deponien zu vermindern. Hierbei hat es sich herausgestellt, daß auch der Schwermetallgehalt des Abgases durch die Erfindung gesenkt wird. Ferner wird die Betriebssicherheit bzw. die Verfügbarkeit der Anlage durch die Pufferwirkung der zweiten Stufe erhöht.

### Darlegung des Wesens der Erfindung

Das erfindungsgemäße Verfahren ist dadurch gekennzeichnet, daß der gesamte Rauchgasstrom abgekühlt und der zu reinigende Rauchgasstrom nach der trockenen ersten Reinigung im Temperaturbereich von unter 400 °C mit NaHCO$_3$, CaO, Ca(OH)$_2$ und/oder Mg(OH)$_2$, einem zweiten staubförmigen, neu eingebrachten Sorbens, in Berührung gebracht wird, das restliche Schadgas abgebunden wird und schließlich der Rauchgasstrom vom beladenen Sorbens in einem zweiten, vorzugsweise als Tuchfilter ausgebildeten, Trockenabscheider gereinigt wird, welcher mindestens 5 °C über dem Wassertaupunkt des Rauchgases betrieben wird.

Verfahrensgemäße Ausgestaltungen der Erfindung sind in den Unteransprüchen 2 bis 7 angegeben.

Die erfindungsgemäße Verbrennungsanlage ist dadurch gekennzeichnet, daß im Bereich des teilweise abgekühlten Rauchgases zwischen dem Elektrofilter, Zyklon oder Multizyklon (2) und einem Tuchfilter (6) die zweite Zuführung (12') für ein zweites Sorbens mit gegenüber dem ersten Sorbens unterschiedlicher chemischer Zusammensetzung vorgesehen ist. Weitere Ausgestaltungen sind den Ansprüchen 9 bis 11 zu entnehmen.

## Ausführungsbeispiel

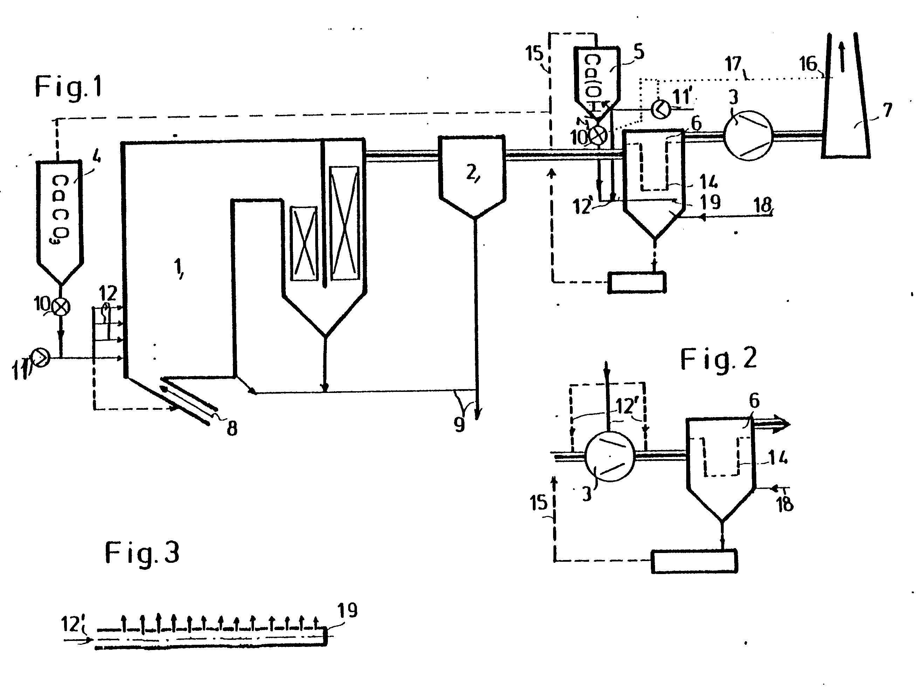

Die Erfindung ist in den angeschlossenen Fig. 1 bis 3 beispielsweise und schematisch dargestellt. Fig. 1 zeigt das Schaltbild einer Müllverbrennungsanlage, Fig. 2 eine Konstruktionsvariante eines Teilbereiches zu Fig. 1 und Fig. 3 im Detail eine Sorbenszuführung.

Die Müllverbrennungsanlage gemäß Fig. 1 umfaßt eine Brennkammer 1, in welche gemäß Pfeil 8 der müllartige Brennstoff eingebracht wird. Die entstehenden Rauchgase werden an den nachgeschalteten Heizflächen abgekühlt und im Trockenabscheider 2, der als Elektrofilter, Multizyklon oder einfacher Zyklon ausgebildet ist, gereinigt und in bekannter Weise über ein Saugzuggebläse 3 einem Kamin 7 zugeführt. Zur Abscheidung der Schadstoffe sind erfindungsgemäß zwei Einrichtungen vorgesehen, wobei die erste im Bereich der Brennkammer 1 einen Kalkstaubbunker 4 umfaßt, von welchem über eine Dosiereinrichtung 10 Kalkstaub mit einer mittleren Korngröße von kleiner als 20 µm einer Luftzuführung zugemischt wird, in welcher die Luft über ein Gebläse 11 in die Brennkammer zur Verbrennung des Brennstoffes eingeblasen wird. Zur gleichmäßigen Verteilung und Dispergierung des Sorbens sind in der Brennkammer mehrere Sorbenszuführungen 12 vorgesehen. In der Brennkammer wird der Kalk in CaO und CO$_2$ zerlegt, wobei das CaO einen Teil der Schadstoffe, insbesondere HCl und SO$_2$, sorbiert. Etwaiges, nicht durch Sorption von Schadstoffen ausgenütztes CaO, welches von den Abgasen in die Heizflächen des Kessels mitgerissen wird, absorbiert beim Verlassen des Kessels im niedrigen Temperaturbereich das mit relativ hohem Partialdruck anwesende CO$_2$, so daß in der Sammelleitung 9 in der Flugasche CaCO$_3$, CaSO$_3$ und CaCl$_2$ nachgewiesen werden kann. Die Schwermetalleinbindung in diesem Bereich ist sehr gering, so daß Abscheidungen des Trockenabscheiders 2 problemlos deponiert werden können. Die beschriebene Anlage gestattet eine Schadgasreinigung in der Größenordnung von 66 %, so daß das den Trockenabscheider 2 verlassende Abgas ca. 1/3 der Schadstoffe der in der Verbrennungsanlage entstehenden Rauchgase enthält. Dieses vorgereinigte Rauchgas wird nun mit einer Temperatur von unter 400 °C einer zweiten Einrichtung, einer zweiten Sorptionsstufe zugeführt, welche als Trockenfilter 6, insbesondere als Tuchfilter, ausgebildet ist, wobei dem Abgas vor der Reinigung bzw. im Reinigungsraum ein reaktives Sorbens wie z. B. Ca(OH)$_2$ aus einem Vorratsbehälter 5 über die Leitung 12' und Zuführungslanze 19 zugemischt wird. Die Einbringung erfolgt mit hoher Dispersion, so daß praktisch jedes einzelne Korn reagieren kann. Die mittlere Korngröße ist hiebei kleiner als 10 µm und weist eine spezifische Oberfläche auf, die größer als 3 m$^2$/g (BET) ist. Dieses reaktive Sorbens wirkt im Trockenfilter und absorbiert die restlichen Schadstoffe, wobei die Sorbensdosierung 10' bzw. die Zuführung 11' der Dispergierungsluft entsprechend dem Schadstoffgehalt im Kamin geregelt wird. Ein Meßfühler 16 und eine entsprechende Meßleitung 17 sind eingezeichnet. Wird das Trockenfilter 6 als Tuchfilter mit eingehängten Filtersäcken 14 ausgebildet, so lagert sich an den Filtersäcken 14 das staubförmige, beladene und unbeladene Sorbens an, wodurch auch bei Ausfall der Frischsorbenszuführung eine weitere Schadstoffsorption erreicht wird, so daß der Schadstoffgehalt des Rauchgases nicht voll auf die Kaminemission durchschlagen kann. Bei der Durchführung hat sich ferner gezeigt, daß das Sorbens der zweiten Stufe ohne weiteres auch schubweise bzw. intermittierend vor dem Trockenabscheider (Tuchfilter) zugeführt werden kann, da es trotz des gleichzeitig am Filtertuch mitabgeschiedenen Staubes über 1 1/2 Stunden seine Reaktivität gleichmäßig beibehält. Dies bedeutet, daß die Sorbensaufgabe in der zweiten Stufe vor dem Tuchfilter schubweise einmal pro Reinigungszyklus in einem zudosiert werden kann, was einerseits die Ausnutzung des zweiten Sorbens verbessert, andererseits auch eine Sorbens-Pufferwirkung für eventuell schwankende Schadgasgehalte aus der ersten Stufe darstellt, und drittens eine technische Vereinfachung gegenüber einer normalerweise schwierigen, kontinuierlichen Dosierung mit sich bringt. Bei der periodischen Abreinigung der Filtersäcke 14 fällt das an ihnen abgeschiedene beladene und unbeladene Sorbens in einen am Filterboden angeordneten Trichter und kann aus diesem zur besseren Ausnutzung des Sorbensgehaltes über die Leitung 15 in den Vorratsbehälter 5 rezirkuliert werden. Dem gemahlenen Sorbens kann zur besseren und leichteren Dispergierung im Rauchgasstrom ein Mahlhilfsmittel wie z. B. Triäthanolamin und/oder ein Gastrocknungsmittel wie z. B. CaCl$_2$ beigemischt werden, wodurch die Rezirkulation des nicht voll ausgenützten Sorbens aus der zweiten Stufe sowohl in die erste als auch in die zweite Stufe, also in den Vorratsbehälter 4 und 5, zweckmäßig ist.

Für die Anfahrphase ist eine Heizeinrichtung 18 im Trockenfilter 16 vorgesehen, so daß sichergestellt wird, daß das Tuchfilter in allen Betriebsphasen oberhalb des Taupunktes betrieben wird.

In Fig. 2 ist eine Ausführungsvariante zur Fig. 1 für das zweite Trockenfilter 6 dargestellt, bei dem die Sorbenszuführung 12' nicht über eine Lanze 19 sondern über das Gebläse 3 erfolgt, welches vor dem Trockenfilter 6 angeordnet ist, wobei die Sorbenszuführung 12' vorzugsweise direkt in das Gebläse 3 mündet bzw. vor oder nach dem Gebläse angeordnet werden kann. Diese Konstruktionsvariante hat den Vorteil, daß das Sorbens durch die Wirkung des Gebläses 3 bzw. die unvermeidliche Wirbelbildung feinst dispergiert wird, wodurch sich die spezifische Reaktivität verbessern läßt. Im Rahmen der Erfingung ist es nun Möglich, den in Fig. 1 dargestellten Trockenabscheider 2 wegzulassen, wodurch aber erreicht wird, daß die Staubbelastung im nachgeschalteten Trockenfilter 6 bedeutend erhöht wird, so daß eine Sorbensrückführung über die Leitung 15 praktisch uninteressant wird. Die Schwermetalleinbindung erfolgt hauptsächlich im Trockenfilter 6, so daß neben dem verbrauchten Sorbens ($CaCl_2$ und $CaSO_3$) auch die Schwermetallverbindungen in der abgeschiedenen Asche gefunden werden können. Diese erhaltene Flugasche kann durch Zumischung von 15 % Zement und 42 % Wasser in eine nicht eluierbare Masse verwandelt werden, die so auch in einer normalen Deponie abgelagert werden kann.

In der Fig. 3 ist eine Lanze 19 für die Sorbenszuführung 12' dargestellt, mittels welcher über den ganzen Eintauchquerschnitt die Sorbensmittelzuführung gleichmäßig erfolgen kann.

In den nachstehenden Tabellen sind Versuchsergebnisse an einem Müllverbrennungskessel mit einer stündlichen Verbrennungsleistung von 12 t angegeben, bei dem 60 000 m³ Abgas pro Stunde anfallen, die einen maximalen HCl-Gehalt von 1 500 mg/Nm³ aufweisen. Im Trockenabscheider 2 fällt normalerweise ohne Kalkdosierung stündlich etwa 600 kg Filterasche an, die in der Tabelle nicht berücksichtigt ist. Die Tabellen sind ausgelegt auf einen Reingasgehalt von 200 mg HCl/Nm³, das entspricht einem Gesamtabscheidegrad von 86,7 %. Aus der ersten Zeile jeder Tabelle ist dabei die Wirkung einer einstufigen Anlage entnehmbar, bei der das Sorbens nur in der zweiten Stufe zugeführt wird. Die Reinigungsmöglichkeit der ersten Trockenstufe in der Brennkammer ist aus der Spalte 3 (HCl-Gehalt zwischen erster und zweiter Stufe) zu entnehmen.

Tabellarische Aufstellung der benötigten Sorbensmengen in kg/h für 60.000 Nm³ Rauchgas und 1 500 mg HCl-Gehalt/Nm³ Rohgas

| 1. Stufe | | HCl-Gehalt zwischen 1.u.2.Stufe | 2. Stufe | | Gesamtmenge |
|---|---|---|---|---|---|
| EBG *) (%) | CaCO₃ | | Erforderi. EBGD | Ca(OH)₂ | |
| 0 | 0 | 1 500 | 86,7 | 585,0 | 585,0 |
| 35 | 120,5 | 975 | 79,5 | 263,3 | 383,3 |
| 40 | 142,9 | 900 | 77,3 | 199,8 | 342,7 |
| 50 | 192,0 | 750 | 73,3 | 121,5 | 313,5 |
| 60 | 263,4 | 600 | 66,7 | 72,0 | 335,4 |
| 70 | 379,5 | 450 | 55,6 | 35,1 | 414,6 |
| 80 | 800 (max) | 300 | 33,3 | 18,0 | 818,0 |

*) EBGD = Einbindegrad

Die erforderliche Stöchiometrie in der 2. Stufe schwankt je nach EBGD zwischen 1 und 6,5.

Tabellarische Kosten für das benötigte Sorbens in AT-Schilling/Stunde Preisbasis 1 t CaCO₃ = ATS 285,- ; 1 t Ca(OH)₂ = ATS 1.160,-

| 1. Stufe | | 2. Stufe | Gesamtkosten (ATS) |
|---|---|---|---|
| EBGD *) (%) | CaCO₃ | Ca(OH)₂ | |
| 0 | 0 | 678,60 | 678,60 |
| 35 | 29,50 | 305,40 | 334,90 |
| 40 | 35,00 | 231,80 | 266,80 |
| 50 | 54,70 | 140,90 | 195,60 |
| 60 | 75,10 | 83,50 | 158,60 |
| 70 | 108,15 | 40,70 | 148,85 |
| 80 | 228,00 | 20,90 | 248,90 |

*) EBGD = Einbindegrade

Der Verbrauch an Sorbentien ist kostenmäßig dann gering, wenn in der ersten Stufe ein Einbindegrad zwischen 60 und 70 % durch Einblasung von billigem Kalk gegeben ist, so daß zur Erreichung der Garantiewerte in der zweiten Stufe ein Einbindegrad von 55 bis 66 % für dasteurere Sorbens notwendig ist. Soll hingegen die Menge des eingeblasenen Sorbens im Hinblick auf die später notwendige Deponie ein Minimum werden, so liegt der Bereich bei 50 % Einbindegrad in der ersten Stufe und 73,3 % im Bereich der zweiten Stufe, wodurch ein jährlicher Sorbentienverbrauch bei 8 000 Betriebsstunden von rund 2 400 t gegeben ist. Dieser Wert erhöht sich bei einem Einbindegrad von 60 bzw. 70 % in der ersten Stufe auf 2 700 bzw. 3 300 t jährlich.

Als Sorbentien können in beliebiger Kombination verwendet werden: $CaCO_3$, $MgCO_3$, $Na_2CO_3$, $NaHCO_3$, $Ca(OH)_2$, $Mg(OH)_2$, CaO, wobei in der ersten Stufe alle genannten und in der zweiten Stufe die vier letztgenannten Sorbentien sinnvoll verwendet werden können. Ein wesentliches Auswahlkriterium stellt dabei der Preis des verwendeten Sorbens dar, der von den örtlichen Gegebenheiten abhängt. Als Ziel der Dispersion in den einzelnen Reinigungsstufen wird eine Einzelkorndispersion angestrebt, so daß die spezifische Oberfläche in der Größenordnung je nach Korngröße von 1 bis 3 m²/g erreicht wird.

**Patentansprüche**

1. Verfahren zur zweistufigen Abscheidung von sauren Schadgasen und von Schwermetallen sowie deren Verbindung aus Rauchgasen nach Verbrennungsanlagen, wie z. B. Müllverbrennungsanlagen, bei welchem mit dem Brennstoff bzw. in den heißen von der Verbrennungsstelle abziehenden Rauchgasstrom mit der benötigten Verbrennungsluft im Bereich der Brennkammer im Temperaturbereich von höher als 700 °C staubförmiges $CaCO_3$ und/oder $MgCO_3$ eingebracht und ein Teil des Schadgases vom staubförmigen Zerfallprodukt gebunden wird sowie das beladene Zerfallprodukt vom Rauchgasstrom abgetrennt wird, dadurch gekennzeichnet, daß der gesamte Rauchgasstrom abgekühlt und der zu reinigende Rauchgasstrom nach der trockenen ersten Reinigung im Temperaturbereich von unter 400 °C mit $NaHCO_3$, CaO, $Ca(OH)_2$ und/oder $Mg(OH)_2$, einem zweiten staubförmigen, neu eingebrachten Sorbens, in Berührung gebracht wird, das restliche Schadgas abgebunden wird und schließlich der Rauchgasstrom vom beladenen Sorbens in einem zweiten, vorzugsweise als Tuchfilter ausgebildeten, Trockenabscheider gereinigt wird, welcher mindestens 5 °C über dem Wassertaupunkt des Rauchgases betrieben wird.

2. Verfahren nach Anspruch 1, dadurch gekennzeichnet, daß das zweite Sorbens eine spezifische Oberfläche größer als 3 m²/g (BET) und/oder eine mittlere Korngröße von kleiner als 10 μm hat, und als Einzelkorn an der Aufgabestelle in den Abgasstrom über den jeweiligen Strömungsquerschnitt gleichmäßig verteilt, und mit Geschwindigkeiten von zwischen 20 und 300 m/s dispergiert wird.

3. Verfahren nach Anspruch 1, dadurch gekennzeichnet, daß dem zweiten Sorbens eine Dispergierungshilfe in Form eines Mahlhilfsmittels und/oder Gastrocknungsmittels wie z. B. Triäthanolamin und/oder $CaCl_2$ beigemischt wird.

4. Verfahren nach Anspruch 1, dadurch gekennzeichnet, daß das zweite Sorbens intermittierend beispielsweise alle 15 Minuten vor dem Tuchfilter im Einklang mit der Abreinigung desselben in den Rauchgasstrom aufgegeben wird.

5. Verfahren nach Anspruch 1, dadurch gekennzeichnet, daß die Aufgabe des zweiten Sorbens in unmittelbarer Nähe eines Saugzuggebläses, insbesondere in dieses, erfolgt.

6. Verfahren nach Anspruch 1, dadurch gekennzeichnet, daß das vom Tuchfilter abgeschiedene, zum Teil beladene Sorbens der Einblasung in der ersten Reinigungsstufe im Bereich der Brennkammer zugeführt wird.

7. Verfahren nach Anspruch 1, dadurch gekennzeichnet, daß die zugeführte Menge an zweitem Sorbens entsprechend dem Schadgasgehalt des Rauchgases am Austritt aus der Verbrennungsanlage und insbesondere der zweiten Reinigungsstufe gesteuert wird.

8. Verbrennungsanlage mit nachgeschalteter Abgasreinigung, bei der sowohl im Bereich der Brennkammer (1) als auch nach dieser Zuführungen für Sorbentien vorgesehen sind, zur Durchführung des Verfahrens nach mindestens einem der Ansprüche 1 bis 7, dadurch gekennzeichnet, daß im Bereich des teilweise abgekühlten Rauchgases zwischen dem Elektrofilter, Zyklon oder Multizyklon (2) und einem Tuchfilter (6) die zweite Zuführung (12') für ein zweites Sorbens mit gegenüber dem ersten Sorbens unterschiedlicher chemischer Zusammensetzung vorgesehen ist.

9. Verbrennungsanlage nach Anspruch 8, dadurch gekennzeichnet, daß die Zuführung (12') des zweiten Sorbens vor dem Tuchfilter (6) im unmittelbaren Bereich eines Saugzuggebläses (3) vorgesehen ist (Fig. 2).

10. Verbrennungsanlage nach Anspruch 8, dadurch gekennzeichnet, daß für das vom Tuchfilter (6) abgeschiedene teilweise verbrauchte Sorbens eine Rezirkulationsleitung (15) in die erste Stufe vorgesehen ist.

11. Verbrennungsanlage nach Anspruch 8, dadurch gekennzeichnet, daß die Zuführung (12') für das zweite Sorbens rohgasseitig direkt vor dem Tuchfilter (6) als Blasrohr (19) ausgeführt ist.

## Claims

1. Process for twin stage separation of acide polluting gas and heavy metals as well as their compound from flue gas after combustion plants such as, for example, refuse incinerating plants according to which dustlike $CaCO_3$ and/or $MgCO_3$ are introduced in the combustion chamber area together with the fuel or with the necessary combustion air into the hot flue gas stream coming from the place of combustion at a temperature of more than 700 °C, and according to which part of the polluting gas is bound by the dustlike decay product and also the loaded decay product is separated from the flue gas stream, characterized in that the whole flue gas stream is cooled and the flue gas stream which is to be cooled after the first dry cleaning at a temperature of less than 400 °C is brought into contact with $NaHCO_3$. CaO. $Ca(OH)_2$ and/or $Mg(OH)_2$, a second dustlike, newly introduced sorbent, the residual polluting gas is bound and finally the loaded sorbent is separated from the flue gas stream in a second dry separator which is preferably designed as a bag filter operating at least 5 °C above the water dew point of the flue gases.

2. Process according to claim 1, characterized in that the second sorbent has a specific surface larger than 3 $m^2$/g (BET) and/or a mean grain size smaller than 10 μm, and that the single grains at the charging point into the flue gas stream are equally distributed over the flow's cross section at the time and are dispersed at speeds between 20 and 300 m/s.

3. Process according to claim 1, characterized in that a dispersing agent in the form of a grinding additive and/or gas desiccant such as, for example, triethanolamine and/or $CaCl_2$ is added to the second sorbent.

4. Process according to claim 1, characterized in that the second sorbent is fed at intervals of for example 15 minutes into the flue gas stream upstream of the bag filter in accordance with its cleaning.

5. Process according to claim 1, characterized in that the feeding of the second sorbent takes place in close proximity to the induced draught fan, in particular into that fan itself.

6. Process according to claim 1, characterized in that the partially loaded sorbent which has been separated by the bag filter is injected in the first purification stage in the area of the combustion chamber.

7. Process according to claim 1, characterized in that the added amount of second sorbent is regulated according to the content of noxious gas in the flue gases at the outlet of the combustion plant and particularly at the outlet of the second purification stage.

8. Combustion plant with downstream waste gas purification providing sorbent supply points both in the area of the combustion chamber (1) and downstream of it for the execution of the process according to at least one of the claims 1 to 7, characterized in that a second supply point (12') for a second sorbent with different chemical composition with regard to the first sorbent is provided in the area of the partially cooled flue gases between the electrostatic filter, cyclone or multi-cyclone (2) and a bag filter (6).

9. Combustion plant according to claim 8, characterized in that the supply (12') of the second sorbent upstream of the bag filter (6) is located in close proximity to the induced draught fan (3) (Fig. 2).

10. Combustion plant according to claim 8, characterized in that a recirculation piping (15) leading into the first stage has been provided for the partially used sorbent separated by the bag filter (6).

11. Combustion plant according to claim 8, characterized in that the supply (12') on the crude gas side directly upstream of the bag filter (6) is constructed as a blast pipe (19).

## Revendications

1. Procédé de séparation à deux étages de gaz polluants acides, métaux lourds et leur combinaison des gaz de fumée d'installations de combustion telles qu'usines d'incinération d'ordures ménagères suivant lequel du $CaCO_3$ et/ou $MgCO_3$ pulvérulent sont introduits avec le combustible ou dans le courant de gaz de fumée chaud sortant du lieu de combustion avec l'air de combustion nécessaire dans la zone de la chambre de combustion à une température de plus de 700 °C et suivant lequel une partie du gaz polluant est fixé par le produit de décomposition pulvérulent ainsi que le produit de décomposition chargé est séparé du courant de gaz de fumée, caractérisé en ce que tout le courant de gaz de fumée est refroidi et le courant de gaz de fumée qui doit être purifié après la première purification sèche à une température de moins de 400 °C est mis en contact avec $NaHCO_3$. CaO. $Ca(OH)_2$, un deuxième sorbant pulvérulent nouvellement introduit, et le gaz polluant résiduaire est lié et finalement le courant de gaz de fumée est purifié du sorbant chargé dans un séparateur sec, de préférence construit comme filtre en tissu qui est opéré à un température au moins 5 °C au-dessus du point de rosée de l'eau du gaz de fumée.

2. Procédé suivant revendication 1 caractérisé en ce que le deuxième sorbant a une surface spécifique plus large que 3 $m^2$/g (BET) et/ou une grosseur de grain moyenne de moins de 10 μm et qu'il est uniformément réparti sous forme de grains isolés sur la section de passage du moment au point de chargement dans le courant de gaz de fumée et dispersé à des vitesses entre 20 et 300 m/s.

3. Procédé suivant revendication 1, caractérisé en ce qu'un agent dispersant sous forme d'additif de broyage et/ou dessicateur de gaz tel que triéthanolamine et/ou $CaCl_2$ est ajouté au deuxième sorbant.

4. Procédé suivant revendication 1, caractérisé en ce que le deuxième sorbant est chargé dans le courant de gaz de fumée avant le filtre en tissu et en accord avec sa purification en discontinu, par exemple toutes les 15 minutes.

5. Procédé suivant revendication 1, caractérisé en ce que le deuxième sorbant est chargé à proximité immédiate d'un ventilateur de tirage par aspiration, de préférence dans ce ventilateur.

6. Procédé suivant revendication 1, caractérisé en ce que le sorbant séparé par le filtre en tissu et partiellement chargé est injecté dans le premier étage de purification dans la zone de la chambre de combustion.

7. Procédé suivant revendication 1, caractérisé en ce que la quantité introduite du deuxième sorbant est réglée suivant le contenu en gaz polluant du gaz de fumée à la sortie de l'installation de combustion et particulièrement du deuxième étage de purification.

8. Installation de combustion avec purification de gaz de fumée aval équipée de points d'alimentation de sorbants dans la zone de la chambre de combustion (1) et après elle pour l'exécution du procédé suivant au moins une des revendications 1 à 7, caractérisée en ce que dans la zone du gaz de fumée partiellement refroidi entre l'électrofiltre, le cyclone ou cyclone multiple (2) et un filtre en tissu (6) un deuxième point d'alimentation (12') est prévu pour un deuxième sorbant dont la composition chimique diffère de celle du premier sorbant.

9. Installation de combustion suivant revendication 8, caractérisée en ce que l'alimentation (12') du deuxième sorbant avant le filtre en tissu (6) est prévue à proximité immédiate d'un ventilateur de tirage par aspiration (3) (Fig. 2).

10. Installation de combustion suivant revendication 8, caractérisée en ce qu'une conduite de recirculation (15) menant au premier étage a été prévue pour le sorbant partiellement usé qui est séparé par le filtre en tissu (6).

11. Installation de combustion suivant revendication 8, caractérisée en ce que l'alimentation (12') du deuxième sorbant du côté du gaz brut directement avant le filtre en tissu (6) est construit sous forme de tuyère d'injection (19).

Fig.1

Fig. 2

Fig.3